# EUROPEAN PATENT SPECIFICATION

(11) **EP 3 887 135 B1**
(45) Date of publication and mention of the grant of the patent: **10.07.2024**
(21) Application number: 19831883.4
(22) Date of filing: 27.11.2019
(51) Int. Cl.: B29C 70/44, B29C 70/34, B29K 105/08, B29K 709/00, B29K 67/00, B29K 63/00, B29K 75/00

(54) **SIMPLIFIED METHOD OF RESIN-REINFORCEMENT OF A STONE BLOCK**
VEREINFACHTES VERFAHREN ZUR HARZARMIERUNG EINES STEINBLOCKS
PROCÉDÉ SIMPLIFIÉ DE RENFORCEMENT PAR RÉSINE D'UN BLOC DE PIERRE

(30) Priority: 27.11.2018 IT 201800010613
(43) Date of publication of application: 06.10.2021
(73) Proprietor: Girasole Pietre Naturali S.r.l., 37015 Sant'Ambrogio di Valpolicella (VR) (IT)
(72) Inventor: ZANTEDESCHI, Pierangelo, 37015 Sant'Ambrogio di Valpolicella (VR) (IT)
(74) Representative: Maroscia, Antonio
(86) International application number: PCT/IB2019/060210
(87) International publication number: WO 2020/110015

(56) References cited:
- WO-A1-2005/077645
- WO-A1-2007/052319
- WO-A1-2007/054995
- WO-A1-2009/133453
- DE-A1- 2 043 489
- JP-A- H11 148 230
- "Rehabilitation of Concrete Structures with Fiber-Reinforced Polymer", 28 September 2018, BUTTERWORTH-HEINEMANN, article RIADH AL-MAHAIDI ET AL: "Fiber-Reinforced Polymers and Their Use in Structural Rehabilitation", pages: 15 - 16, XP055603440
- R.J. GRAVINA ET AL: "Application of Heat/Resin Injection in the Presence of Vacuum for FRP Attachments on the Concrete Substrate", APPLIED MECHANICS AND MATERIALS, vol. 438-439, 1 October 2013 (2013-10-01), pages 459 - 466, XP055603470, DOI: 10.4028/www.scientific.net/AMM.438-439.459
- FARIEZUL JAAFAR: "Fibre Reinforced Plastic: Storage and Handling of Prepregs", 15 March 2010 (2010-03-15), XP055566447, Retrieved from the Internet <URL:http://www.fibre-reinforced-plastic.com/2010/03/storage-and-handling-of-prepregs.html> [retrieved on 20190308]

## Description

### Technical Field

The present invention generally finds application in the field of stone working, i.e. working on stone materials such as marble, granite, onyx and the like, and particularly relates to a simplified method of resin-reinforcement of a block of one of these materials, having cracks and/or surface defects or at different depths.

### Background Art

In the field of stone working, quarry blocks are known to exhibit a large and increasing amount of natural stone defects, namely surface or internal cracks at various depths, possibly having a "heart" shape, due to the poor availability of quarrying sites and the environmental and social obstacles to protection.

In view of obviating this serious drawback, resin-reinforcement methods have been long known for consolidating the blocks and making them ready for subsequent cutting into slabs, without exposing them to fracture or crumbling.

Furthermore, defective blocks have always caused a safety issue in the working cycle to convert them into slabs and in slab working processes.

Prior art resin-reinforcement methods included forming a wooden formwork that enclosed the block and creating a gap between the formwork and the block surface, and later pouring a curing resin into the gap to spread the resin into the interstices of the block.

Typically, the resin is mixed with catalysts to accelerate curing once it has penetrated the defects.

Furthermore, the method includes a step of introducing the block enclosed in the formwork into a hermetically sealed environment, such as an autoclave, whose pressure is decreased and possibly later increased from atmospheric pressure to urge the fluid resin into the cracks or defects before resin curing.

A first drawback of this prior art method is that the provision of a formwork entails heavy labor and material requirements and a resulting increase of repair costs.

A further drawback is that the outer surface of the block often has an irregular shape, whereby a gap having a considerable volume and a variable thickness is formed between the inner walls of the formwork and the outer surface of the block.

Since this gap must be entirely filled to ensure that the defects or cracks of the block will be filled up, the use of a formwork entails the consumption of large amounts of resin, much larger than those strictly required for block repair.

A further drawback is that this method requires plants with dedicated workstations to ensure optimized implementation.

In an attempt to at least partially obviate these drawbacks, methods for resin-reinforcement of stone slabs have been developed, which use flexible materials conforming with the irregular shape of the block.

WO2005/077645 discloses a method of resin-reinforcement of marble blocks which includes applying a drainage layer to at least the side walls of the block and a later step of introducing the block into a bag formed from a sheet of flexible waterproof material.

The bag is connected to a vacuum pump and has connectors for a resin to be injected by a mixing and injection apparatus. Then, vacuum is maintained in the bag until the resin is fully cured.
WO2007/054995 discloses a method for treating stone blocks using vacuum wherein a block is surrounded by a draining layer and by a sealed, flexible, gas-impermeable sheath. Suction is implemented from the top of the volume enclosed by the sheath to create therein a high degree of vacuum, polymerizable liquid resin is fed from the bottom of said volume to cover the entire surface of the block with vacuum conditions inside the sealed volume and the vacuum is maintained while the block is placed in an autoclave creating pressure outside said sealed sheath.

One drawback of these known methods consists in that the application of the drainage layer on the walls of the structural element or sealed, flexible, gas-impermeable sheath surrounding the block and vacuum is a time-consuming and laborious operation, which requires considerable labor, with a corresponding increase of process costs.

Furthermore, once the resin has cured, the flexible sheet may adhere on the drainage layer thereby preventing its removal at the end of the process and before cutting the block into slabs. The plastic sheet that adheres to the drainage layer must be necessarily removed before sawing to avoid problems during sawing and any damage to the cutting machine.

### Technical Problem

In view of the state of the art, the technical problem addressed by the present invention is to provide a simpler and more effective method of resin-reinforcement of blocks, while reducing process times and the amount of resin to be used.

### Disclosure of the invention

The object of the present invention is to obviate the above drawback, by providing a simplified method of resin-reinforcement of a stone material that is highly efficient and relatively cost-effective.

A particular object of the present invention is to provide a method as described hereinbefore that can be easily implemented, and reduces the overall amount of resin to be used in the process.

A further object of the present invention is to reduce the steps of the resin-reinforcement method, by avoiding both resin preparation steps and the application of drainage or intermediate layers.

Another object of the present invention is to provide a method as described hereinbefore that can consolidate blocks irrespective of their shape and size.

Yet another object of the present invention is to provide a method as described hereinbefore that can consolidate a block having both defects both at the surface and at a greater depth and irrespective of the type of defects.

These and other objects, as more clearly explained hereinafter, are fulfilled by a simplified method of resin-reinforcement of a block of a stone material, such as marble, granite, onyx, having cracks and/or shallow or deep defects, as defined in claim 1.

In a preferred embodiment, the process comprises the steps of a) providing a sheet of flexible waterproof plastic material and placing a block to be resin-reinforced on the sheet, b) applying a layer of flexible heat-shrink material pre-impregnated with resin to one or more walls of the block, c) folding of the sheet on the walls of the block wrapped in the layer of pre-impregnated material to form a hermetically sealed container around the block and d) heating the block in the container to a predetermined temperature to melt and/or fluidize the resin.

In a preferred embodiment, the method includes the steps of: e) maintaining the predetermined temperature for a predetermined time to urge the melted resin into the cracks and/or the defects of the block due to the heating and shrinking effect of the layer of flexible heat-shrink material, f) cooling the block until the resin is at least partially cured and g) removing the resin-reinforced block from the container.

With this succession of steps, resin-reinforcement may be carried out in a simple manner, and the overall amount of resin to be used in the method may be reduced.

Advantageously, the pre-impregnated flexible layer of heat-shrink material comprises a substrate made of fibrous material which is impregnated with a resin and covered on both sides with non-stick plastic films.

Once one of the films that faces the outer surface of the block has been removed, the substrate may be placed in contact with the block to urge the melted and fludized resin, while preventing the resin from adhering to the plastic sheet of the container and allowing the sheet to be reused for resin-reinforcement of further blocks.

Advantageous embodiments of the invention are obtained in accordance with the dependent claims.

### Brief description of the drawings

Further features and advantages of the invention will be more apparent from the detailed description of a preferred, non-exclusive embodiment of a method of resin-reinforcement of a stone block according to the invention, which is described as a non-limiting example with the help of the annexed drawings, in which:
FIG. 1 is a block diagram of the resin-reinforcement method of the invention;
FIG. 2 is a schematic perspective view of a first step of the inventive method;
FIGS. 3 and 4 are schematic perspective views of further steps of the inventive method;
FIG. 5 is broken away view of a detail of the inventive method;
FIG. 6 is a schematic top view of Fig. 4.

### Detailed description of a preferred exemplary embodiment

Particularly referring to the above figures, there is shown a simplified method of resin-reinforcement of a block 1 of a stone material, such as marble, granite, onyx and the like having surface cracks D and/or defects at various depths.

As used hereinafter, the term "resin-reinforcement" is intended to designate the process for applying a resin layer on the surface of a block or an article made of stone material to fill the surface defects by coating, injection or a layer of resin to penetrate its surface defects by coating, injection or suction, in order to consolidate the base material before any further handling and cutting into slabs.

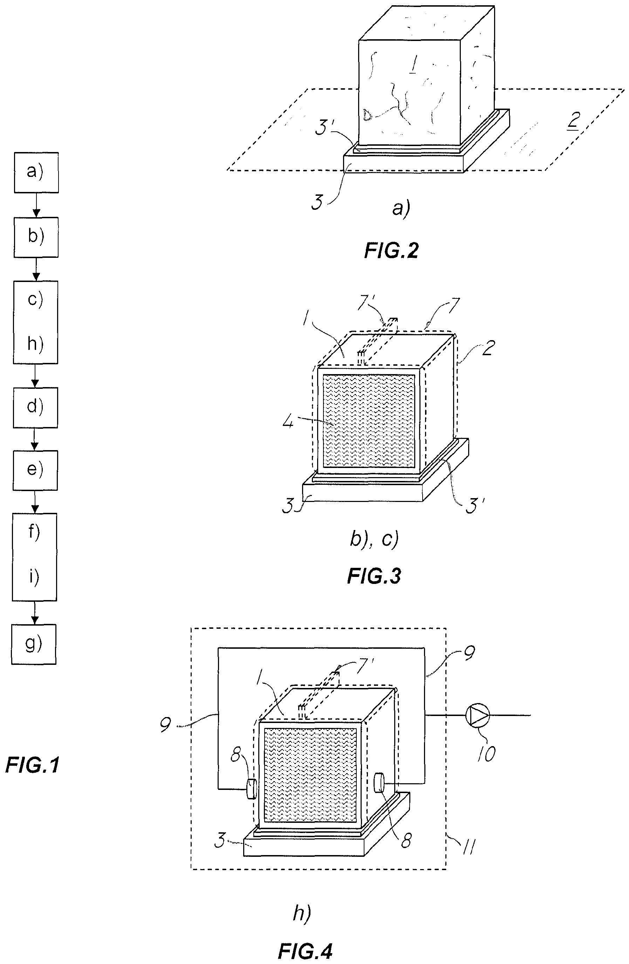

In a preferred embodiment of the invention, as shown in FIG. 2, the method comprises a step of a) providing a sheet 2 of flexible waterproof plastic material on a base 3 and placing a block 1 to be resin-reinforced on the sheet 2.

The plastic material of the sheet 2 may preferably be transparent and selected from the group of plastic materials comprising nylon, polyethylene, silicone or silicone-backed fabric. The base 3 may comprise a suitably reinforced wooden pallet or a rotating metal support adapted to facilitate the subsequent steps of the method.

Conveniently, the block 1 may be previously washed, dried and possibly pre-heated before the step of a) placing the block 1 on the sheet of plastic material 2.

Preferably, the sheet 2 may be placed on the base 3 with the interposition of a cushion layer 3' made of a soft material, adapted to protect the sheet 2 from cuts and ruptures.

Such cushion layer 3' may comprise a fabric of predetermined thickness, made of fibers of natural or synthetic material, possibly associated with suitable spacers to support the weight of the block 1.

The method includes a step of b) applying a layer 4 of a flexible heat-shrink material pre-impregnated with resin R to one or more walls of the block 1.

In a first embodiment of the invention, as shown in FIG. 3, the pre-impregnated layer 4 may be only applied to the block 1 at the areas with the defects D, to avoid unnecessary operations on the non-defective parts.

In a second embodiment of the invention, the layer 4 pre-impregnated with resin R may be applied to all the side walls of the block 1 to be resin-reinforced, to effectively facilitate consolidation of the block 1 and impart resistance thereto during cutting.

For this purpose, the step of b) applying the heat-shrink layer 4 pre-impregnated with resin R may be carried out by gluing the layer 4 to the outer surface of the block 1 with silicone or another equivalent adhesive.

In both first and second embodiments, the step of b) applying may be carried out iteratively to apply multiple pre-impregnated layers 4 one on top of the other and increase the amount of resin R, without departure from the scope of the invention.

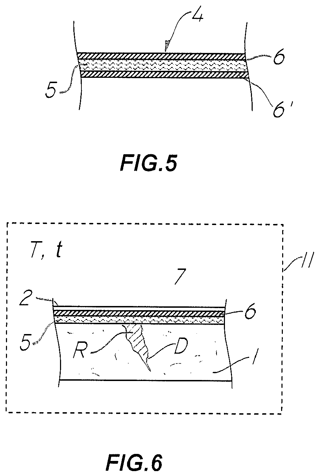

According to a particular aspect of the invention, the flexible pre-impregnated layer 4 may comprise a substrate 5 made of heat-shrink material impregnated with resin R and covered on both sides with non-stick plastic films 6, 6', as shown in FIG. 5.

The substrate 5 may comprise a fabric made of fibers of a material selected from the group including glass, basalt, carbon or the aromatic polyamides or another material adapted to decrease in size with temperature.

Furthermore, the resin R may be of thermosetting type, selected from the group comprising epoxy, polyurethane, polyester, thermoplastic and water resins or a combination thereof.

The pre-impregnated layer 4 may have a variable thickness depending on the amount of resin R contained in the substrate 5, for example the substrate 5 may have a thickness of 1 mm and the resin R may have a thickness ranging from 2mm and 10mm on both sides of the substrate 5.

Of course, these values are given merely by way of example and may be suitably changed according to the types of defects D in the block 1 and the desired consolidation level, without departure from the scope of the invention.

In the step of b) applying, the pre-impregnated layers 4 may include resins R of different materials depending on the type of defects D, or may comprise a substrate 5 impregnated with a thin layer of resin R for mainly surface defects and a substrate 5' impregnated with a layer of greater thickness, and hence with a greater amount of resin R for deeper defects.

It will be appreciated that the particular combination of characteristics of the pre-impregnated flexible heat-shrink layer 4 and of the resin-reinforcement method of the invention as described above can reduce the overall amount of resin R, and avoid the use of additional drainage layers, irrespective of the shape and size of the block to be resin-reinforced 1, and especially without having to inject or introduce the resin with complex and expensive injection systems.

Conveniently, before the step of b) applying, the pre-impregnated flexible heat-shrink layer 4 must be stored in a cold room at a temperature ranging from -20°C to 30°C and preferably of about -16°C.

This can prevent resin that impregnates the layer 4 from starting to cure and harden prior to application thereof in the step b) of the simplified method of the invention.

Once the pre-impregnated layer 4 has been picked-up from the cold room, at least one of the non-stick films 6, 6' is detached from the substrate 5 before application of the pre-impregnated layer 4 to one or more of the walls of the block 1 in the step b).

In a preferred embodiment of the invention, the other non-stick film 6 is held on the substrate 5, while maintaining the non-stick properties unaltered.

By this arrangement, as best explained hereinbelow, the thermosetting resin R will be prevented from adhering to the sheet 2 such that the latter may be reused for resin-reinforcement of further stone blocks 1.

It will be appreciated that, once the pre-impregnated layer 4 has been picked up from the cold room, it will progressively increase its plasticity and deformability to be wrapped around the surface of the block 1 and perfectly fit with the latter.

Once the pre-impregnated layer 4 has been applied to the surface of the block 1, a step is carried out of c) folding the sheet 2 on the walls of the block 1 to wrap it entirely and form a hermetically sealed container 7.

In a preferred embodiment, the flexible plastic sheet 2 may be made of silicone or silicone-backed fabric and may be conveniently shaped as a bag, possibly with a removable or zipper sealed cover 7'.

In this embodiment, the inner surface of the sheet 2 that contacts the block 1 to be resin-reinforced may be coated with a PTFE-based release paint to prevent the thermosetting resin R from adhering to the sheet 2 so that the latter can be reused for resin-reinforcement of other stone blocks 1.

This embodiment can also avoid the use of the cushion layer 3' between the base 3 and the block 1 and allows the container 7 to be reused for resin-reinforcement of other stone blocks 1.

It shall be noted that, due to the particular heat-shrink property of the pre-impregnated flexible layer 4, use of vacuum may be also prevented while injecting the resin R into the surface cracks and/or defects D.

Nevertheless, after the step c) of folding, a step may be provided of h) applying connectors 8 to the outer surface of the container 7 and connecting them to a vacuum source via pipes 9, as schematically shown in FIG. 4.

As is known per se, the vacuum source may consist of a pump or an autoclave 10 adapted to extract the air in the container 7 and promoting drawing of the resin R into the defects D of the block 1. For example, the pump or autoclave 10 may create a vacuum pressure in the container 7 that ranges from -0,9 bar to -2 bar and is preferably -0,5 bar.

After the step of c) folding, the block 1 wrapped in the layer 4 and placed in the container 7 undergoes a step of d) heating to a predetermined temperature T to melt and/or fluidize the resin R of the pre-impregnated heat-shrink layer 4.

The step of d) heating may be carried out by placing the block 1 in the container 7 into a heated environment having an average temperature that ranges from 20°C to 180°C depending on the material of the resin R.

In order to ensure melting of the resin R and obtain optimized penetration of the defects thereby, the average heating temperature T shall range from 70°C to 120°C.

The term "heated environment" shall be intended to designate any device having an at least partially closed chamber 11 that is adapted to contain the block 1 to be resin-reinforced and to heat it using an internal or external heat source, e.g. by forced air circulation, natural convection or thermal conduction or radiation, as shown in FIG. 6.

For example, heating may be obtained using electrical resistors or using an alternating magnetic field applicator having an oscillation frequency in the radio frequency or microwave range.

Alternatively, heating may be obtained using an electric blanked wrapped around the walls of the block 1 to be repaired.

The method of the invention comprises a step of e) maintaining the predetermined temperature T for a predetermined time t to urge the melted resin R into the cracks and/or defects D of the block 1 due to the synergistic effect of heat and shrinking of the flexible heat-shrink layer 4.

The predetermined time t in the step of e) maintaining may range from 15 minutes to 2 hours depending on the material of the resin R and the shape and size of the block 1 to be resin-reinforced.

By way of example, a predetermined temperature T close to about 80°C maintained for a time t close to 1 hour will be sufficient for resin-reinforcement of a marble block approximately having a cube shape of side 2.5m.

The final steps are f) cooling the block 1 until the resin R is at least partially cured and g) removing the resin-reinforced block 1 from the container 7 for later processing of the block 1 in safe conditions.

Advantageously, the step of f) cooling may be carried out in an area outside the furnace and at room temperature to avoid the use of mechanical cooling means.

In an alternative embodiment, the steps of d) heating and f) cooling may be carried out both in the closed chamber 11 with means for heating the block 1 of the aforementioned type and with a series of ducts communicating with the outside to pick up fresh air and channel it on the block 1 for faster cooling thereof.

If the step of h) applying the connectors 8 connected to a vacuum source is carried out, then an additional possible step of i) disconnecting the pipes 9 from the container 7 may be provided.

Of course, both placement of the block 1 on the base 3 in step a) and removal of the block 1 from the container 7 in step g) may be carried out by any lifting and transport means, for example a crane or a lift truck, not shown.

It will be appreciated from the foregoing that the method of resin-reinforcement of a stone block fulfills the intended objects and is particularly able to reduce the overall amount of resin in a simple and inexpensive manner.

The method of resin-reinforcement of stone blocks according to the invention is susceptible of a number of changes and variants, within the inventive concept disclosed in the appended claims.

While the method has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in factories of the inert material processing industry.

## Claims

1. A simplified method of resin-reinforcement of a block (1) of stone material, such as marble, granite, onyx, and other similar natural materials having surface cracks and/or defects (D), said method comprising the steps of:
a) providing a sheet (2) of flexible waterproof plastic material on a base (3) and placing a block (1) to be resin-reinforced on said sheet (2);
b) applying a layer (4) of a flexible heat-shrink material pre-impregnated with resin (R) to one or more walls of the block (1);
c) folding said sheet (2) on the walls of the block (1) wrapped in the layer (4) made of pre-impregnated material, to form a hermetically sealed container (7) around the block (1);
d) heating the block (1) in said container (7) to a predetermined temperature (T) to melt and/or fluidize the resin (R);
e) maintaining the predetermined temperature (T) for a predetermined time (t) to urge the melted resin (R) into the cracks and/or defects (D) of the block (1) caused by heating and shrinking of said flexible heat-shrink layer (4);
f) cooling the block (1) until the resin (R) is at least partially cured;
g) removing the resin-reinforced block (1) from said container (7).

2. Method as claimed in claim 1, **characterized in that** said pre-impregnated flexible heat-shrink layer (4) comprises a substrate (5) made of heat-shrink material impregnated with resin (R), which is covered on both sides with non-stick plastic films (6, 6').

3. Method as claimed in claim 1, **characterized in that** said pre-impregnated flexible heat-shrink layer (4) is maintained in a plastic or semirigid state by cooling thereof in a cold room at a temperature ranging from -20°C to 30°C, preferably of about -16°C.

4. Method as claimed in claim 2, **characterized in that** said substrate (5) is a fabric made of fibers of a material selected from the group including glass, basalt, carbon or the aromatic polyamides or another material adapted to decrease in size with temperature.

5. Method as claimed in claim 1, **characterized in that** said resin (R) is of the thermosetting type and is selected from the group comprising epoxy, polyurethane, polyester resins or a combination thereof.

6. Method as claimed in claim 1, **characterized in that** said pre-impregnated heat-shrink layer (4) has a variable thickness depending of the amount of resin (R) contained in said substrate (5).

7. Method as claimed in claim 1, **characterized in that** said step of b) applying said heat-shrink layer (4) pre-impregnated with resin (R) is carried out by gluing said layer (4) with silicone or an adhesive material.

8. Method as claimed in claim 2 **characterized in that**, before applying said pre-impregnated heat-shrink layer (4) to one or more of the walls of the block (1), at least one of said non-stick films (6, 6') is detached from the substrate (5).

9. Method as claimed in claim 2 **characterized in that**, before applying said pre-impregnated layer (4) to one or more of the walls of the block (1) one of the non-stick films (6') which is designed to face the block surface is detached from the substrate (5), the other of said non-stick films (6) being held on the substrate (5) to prevent resin (R) from adhering to said sheet (2) and allowing reuse of said sheet (2) for resin-reinforcement of other blocks.

10. Method as claimed in claim 1, **characterized in that** said step of d) heating is carried out with a resistance furnace or electromagnetic wave generators, or with a hot air generator at an average temperature ranging from 20°C to 180°C depending on the resin (R) in use.

11. Method as claimed in claim 1, **characterized in that**, before being placed on said sheet of plastic material (2), the block (1) is washed, dried and possibly pre-heated.

12. Method as claimed in claim 1, **characterized in that** during said step of e) maintaining the predetermined temperature (T) is constantly monitored by temperature sensors, said sensors being placed in contact with the walls of the block (1) during said step of b) applying.

13. Method as claimed in claim 1, **characterized in that** said flexible waterproof sheet (2) is made of silicone or silicone-backed fabric to facilitate re-use thereof for resin-reinforcement of further blocks (1), said sheet (2) being bag-shaped with a removable or zipper sealed cover (7') to form said container (7) in said step of c) folding.

## Patentansprüche

1. Ein vereinfachtes Verfahren zur Harzverstärkung eines Blocks (1) aus Steinmaterial wie Marmor, Granit, Onyx und anderen ähnlichen natürlichen Materialien mit Oberflächenrissen und/oder Defekten (D), wobei das Verfahren die folgenden Schritte umfasst:
a) Bereitstellen einer Folie (2) aus flexiblem, wasserfestem Kunststoffmaterial auf einer Unterlage (3) und Platzieren eines mit Harz (R) zu verstärkenden Blocks (1) auf der Folie (2);
b) Aufbringen einer Schicht (4) aus einem flexiblen Wärmeschrumpfmaterial, das mit Harz (R) vorimprägniert ist, auf eine oder mehrere Wände des Blocks (1);
c) Falten der Folie (2) auf den Wänden des Blocks (1), umhüllt von der Schicht (4) aus vorimprägniertem Material, um einen hermetisch verschlossenen Behälter (7) um den Block (1) herum zu bilden;
d) Erhitzen des Blocks (1) in dem Behälter (7) auf eine vorbestimmte Temperatur (T), um das Harz (R) zu schmelzen und/oder zu verflüssigen;
e) Aufrechterhalten der vorgegebenen Temperatur (T) für eine vorgegebene Zeit (t), um das geschmolzene Harz (R) durch Erhitzen und Schrumpfen der flexiblen Wärmeschrumpfschicht (4) in die Risse und/oder Defekte (D) des Blocks (1) zu drücken.
f) Abkühlen des Blocks (1), bis das Harz (R) zumindest teilweise ausgehärtet ist;
g) Entfernen des harzverstärkten Blocks (1) aus dem Behälter (7).

2. Verfahren nach Anspruch 1, **dadurch gekennzeichnet, dass** die vorimprägnierte flexible Wärmeschrumpfschicht (4) ein Substrat (5) umfasst, das aus mit Harz (R) imprägniertem Wärmeschrumpfmaterial ist, wobei das Substrat (5) auf beiden Seiten mit Antihaft-Kunststofffolien (6, 6') bedeckt ist.

3. Verfahren nach Anspruch 1, **dadurch gekennzeichnet, dass** die vorimprägnierte flexible Wärmeschrumpfschicht (4) durch Abkühlen in einem Kühlraum bei einer Temperatur im Bereich von -20°C bis 30°C, vorzugsweise etwa -16 °C, in einem plastischen oder halbstarren Zustand gehalten wird.

4. Verfahren nach Anspruch 2, **dadurch gekennzeichnet, dass** das Substrat (5) ein Gewebe aus Fasern aus einem Material ist, das aus der Gruppe ausgewählt ist, die Glas, Basalt, Kohlenstoff oder die aromatischen Polyamide umfasst, oder aus einem anderen Material, dessen Größe sich mit der Temperatur verringert.

5. Verfahren nach Anspruch 1, **dadurch gekennzeichnet, dass** das Harz (R) vom duroplastischen Typ ist und aus der Gruppe ausgewählt wird, die Epoxid-, Polyurethan-, Polyesterharze oder eine Kombination davon umfasst.

6. Verfahren nach Anspruch 1, **dadurch gekennzeichnet, dass** die vorimprägnierte Wärmeschrumpfschicht (4) eine variable Dicke aufweist, die abhängig von der im Substrat (5) enthaltenen Harzmenge (R) ist.

7. Verfahren nach Anspruch 1, **dadurch gekennzeichnet, dass** der Schritt b) Aufbringen der mit Harz (R) vorimprägnierten Wärmeschrumpfschicht (4) durch Verkleben der Schicht (4) mit Silikon oder einem Klebematerial erfolgt.

8. Verfahren nach Anspruch 2, **dadurch gekennzeichnet, dass**, vor dem Aufbringen der vorimprägnierten Wärmeschrumpfschicht (4) auf eine oder mehrere der Wände des Blocks (1), mindestens eine der Antihaftfolien (6, 6) vom Substrat (5) abgelöst wird.

9. Verfahren nach Anspruch 2, **dadurch gekennzeichnet, dass** vor dem Aufbringen der vorimprägnierten Schicht (4) auf eine oder mehrere der Wände des Blocks (1), das der Antihaftfolien (6'), die so gestaltet ist, dass sie der Wand zugewandt ist, vom Substrat (5) entfernt wird, wobei die andere der Antihaftfolien (6) auf dem Substrat (5) gehalten wird, um zu verhindern, dass das Harz (R) an der Folie (2) haftet, und um eine Wiederverwendung der Folie (2) zur Harzverstärkung anderer Blöcke zu ermöglichen.

10. Verfahren nach Anspruch 1, **dadurch gekennzeichnet, dass** Schritt d) Erhitzen erfolgt mit einem Widerstandsofen oder elektromagnetischen Wellengeneratoren oder mit einem Heißluftgenerator bei einer Durchschnittstemperatur von 20°C bis 180°C, abhängig vom verwendeten Harz (R) erfolgt.

11. Verfahren nach Anspruch 1, **dadurch gekennzeichnet, dass** der Block (1) vor dem Auflegen auf die Kunststofffolie (2) gewaschen, getrocknet und gegebenenfalls vorgewärmt wird.

12. Verfahren nach Anspruch 1, **dadurch gekennzeichnet, dass** während Schritt e) die Aufrechterhaltung der vorgegebenen Temperatur (T) ständig durch Temperatursensoren überwacht wird, wobei die Sensoren während Schritt b) in Kontakt mit den Wänden des Blocks (1) gebracht werden.

13. Verfahren nach Anspruch 1, **dadurch gekennzeichnet, dass** die flexible wasserdichte Folie (2) aus Silikon oder silikonbeschichtetem Stoff hergestellt ist, um ihre Wiederverwendung zur Harzverstärkung weiterer Blöcke (1) zu erleichtern, wobei die Folie (2) beutelförmig gefertigt ist und mit einer abnehmbaren oder mit einem Reißverschluss versiegelten Abdeckung (7') ausgestattet ist, um den Behälter (7) im Schritt c) des Faltens zu bilden.

## Revendications

1. Procédé simplifié de renforcement par résine d'un bloc (1) de matériau pierreux, tel que marbre, granit, onyx et autres matériaux naturels similaires présentant des fissures et/ou des défauts de surface (D), ledit procédé comprenant les étapes suivantes:
a) prévoir une feuille (2) en matière plastique souple imperméable sur une base (3) et placer un bloc (1) à renforcer par résine sur ladite feuille (2) ;
b) appliquer une couche (4) d'un matériau thermorétractable flexible pré-imprégné de résine (R) sur une ou plusieurs parois du bloc (1);
c) plier ladite feuille (2) sur les parois du bloc (1) enveloppé dans la couche (4) en matériau pré-imprégné, pour former un récipient hermétiquement fermé (7) autour du bloc (1);
d) chauffer le bloc (1) dans ledit récipient (7) à une température prédéterminée (T) pour faire fondre et/ou fluidiser la résine (R) ;
e) maintenir la température prédéterminée (T) pendant une durée prédéterminée (t) pour pousser la résine fondue (R) dans les fissures et/ou défauts (D) du bloc (1) grâce au chauffage et rétrécissement de ladite couche thermorétractable flexible (4);
f) refroidir le bloc (1) jusqu'à ce que la résine (R) soit au moins partiellement durcie;
g) retirer le bloc renforcé de résine (1) dudit récipient (7).

2. Procédé selon la revendication 1, **caractérisé en ce que** ladite couche thermorétractable flexible pré-imprégnée (4) comprend un substrat (5) en matériau thermorétractable imprégné de résine (R), qui est recouvert des deux côtés de films plastiques antiadhésifs (6, 6').

3. Procédé selon la revendication 1, **caractérisé en ce que** ladite couche thermorétractable flexible pré-imprégnée (4) est maintenue à l'état plastique ou semi-rigide par refroidissement de celle-ci en chambre froide à une température allant de -20°C à 30°C, de préférence d'environ -16°C.

4. Procédé selon la revendication 2, **caractérisé en ce que** ledit substrat (5) est un tissu constitué de fibres d'un matériau choisi dans le groupe comprenant le verre, le basalte, le carbone ou les polyamides aromatiques ou un autre matériau adapté pour diminuer de taille avec la température.

5. Procédé selon la revendication 1, **caractérisé en ce que** ladite résine (R) est du type thermodurcissable et est choisie dans le groupe comprenant les résines époxy, polyuréthane, polyester ou une combinaison de celles-ci.

6. Procédé selon la revendication 1, **caractérisé en ce que** ladite couche thermorétractable pré-imprégnée (4) a une épaisseur variable en fonction de la quantité de résine (R) contenue dans ledit substrat (5).

7. Procédé selon la revendication 1, **caractérisé en ce que** ladite étape b) d'application de ladite couche thermorétractable (4) pré-imprégnée de résine (R) est réalisée en collant ladite couche (4) avec du silicone ou un matériau adhésif.

8. Procédé selon la revendication 2, **caractérisé en ce que**, avant d'appliquer ladite couche thermorétractable pré-imprégnée (4) sur une ou plusieurs des parois du bloc (1), au moins un desdits films antiadhésifs (6, 6') est détaché du substrat (5).

9. Procédé selon la revendication 2, **caractérisé en ce que**, avant d'appliquer ladite couche pré-imprégnée (4) sur une ou plusieurs des parois du bloc (1), l'un des films antiadhésifs (6') qui est conçu pour faire face au la surface du bloc est détachée du substrat (5), l'autre desdits films antiadhésifs (6) étant maintenu sur le substrat (5) pour empêcher la résine (R) d'adhérer à ladite feuille (2) et permettre la réutilisation de ladite feuille (2) pour le renforcement en résine d'autres blocs.

10. Procédé selon la revendication 1, **caractérisé en ce que** ladite étape de d) chauffage est réalisée avec un four à résistance ou des générateurs d'ondes électromagnétiques, ou avec un générateur d'air chaud à une température moyenne allant de 20°C à 180°C selon la résine (R) en cours d'utilisation.

11. Procédé selon la revendication 1, **caractérisé en ce que**, avant d'être posé sur ladite feuille de matière plastique (2), le bloc (1) est lavé, séché et éventuellement préchauffé.

12. Procédé selon la revendication 1, **caractérisé en ce que** pendant ladite étape e) le maintien de la température prédéterminée (T) est surveillé en permanence par des capteurs de température, lesdits capteurs étant placés en contact avec les parois du bloc (1) pendant ladite étape b.

13. Procédé selon la revendication 1, **caractérisé en ce que** ladite feuille imperméable flexible (2) est réalisée en silicone ou en tissu à support silicone pour faciliter sa réutilisation pour le renforcement par résine d'autres blocs (1), ladite feuille (2) étant en forme de sac avec un couvercle amovible ou scellé par fermeture éclair (7') pour former ledit conteneur (7) lors de ladite étape de c) pliage.
